# EUROPEAN PATENT SPECIFICATION

(11) **EP 3 841 067 B1**
(45) Date of publication and mention of the grant of the patent: **10.01.2024**
(21) Application number: 19852042.1
(22) Date of filing: 21.08.2019
(51) Int. Cl.: C02F 1/44, B01D 61/36, C02F 103/08, C02F 1/02, C02F 101/10, C02F 103/10, C02F 103/16, C02F 101/00, C02F 103/02

(54) **METHOD FOR MINERALS AND WATER SEPARATION**
VERFAHREN ZUR MINERAL- UND WASSERABSCHEIDUNG
PROCÉDÉ DE SÉPARATION DES MINÉRAUX ET DE L'EAU

(30) Priority: 21.08.2018 US 201862720308 P
(43) Date of publication of application: 30.06.2021
(73) Proprietor: US Metals Refining Group, Inc., Centennial, Colorado 80016 (US)
(72) Inventor: KASAINI, Henry W., Centennial, Colorado 80016 (US)
(74) Representative: D Young & Co LLP
(86) International application number: PCT/US2019/047594
(87) International publication number: WO 2020/041530

(56) References cited:
- WO-A1-95/32051
- WO-A1-2015/077727
- CN-A- 105 712 561
- US-A1- 2004 211 726
- US-A1- 2008 296 215
- US-A1- 2013 020 259
- US-A1- 2013 133 249
- US-A1- 2015 203 377
- US-A1- 2016 207 798

## Description

### FIELD

The invention relates to a method for separating minerals from a mineral containing wastewater by pervaporation at an elevated temperature.

### SUMMARY

Some relevant documents are CN 105 712 561 A, US 2004/211726 A1, US 2016/207798 A1, WO 95/32051 A1. The invention is set out in the appended set of claims. The essential features of the method for the separation of water and minerals from a mineral-containing wastewater stream are disclosed according to claim 1.

The foregoing method may be characterized as having different implementations, refinements and/or additional steps, which may be employed alone or in any combination. In one implementation, the mineral-rich product comprises a retentate stream formed in the retentate volume of the membrane assembly. The preferred embodiments are described in dependent claims 2-8.

In one implementation, the mineral-rich product comprises a solid phase that deposits within the permeate volume of the membrane assembly. In one refinement, the step of reducing the pressure in the permeate volume of the membrane assembly comprises reducing the pressure to not greater than about 0.3 bar. In another refinement, the step of reducing the pressure in the permeate volume of the membrane assembly comprises reducing the pressure to not less than about 0.1 bar. In yet another refinement, the step of reducing the pressure in the permeate volume of the membrane assembly comprises reducing the pressure to not less than about 0.2 bar. In another refinement, the step of passing the mineral-containing wastewater stream through the membrane assembly comprises passing the wastewater stream at a temperature of at least about 65°C. In a further refinement, the step of passing the mineral-containing wastewater stream through the membrane assembly comprises passing the wastewater stream at a temperature of not greater than about 90°C. In one particular refinement, the step of passing the mineral-containing wastewater stream through the membrane assembly comprises passing the wastewater stream at a temperature of at least about 70°C and not greater than about 80°C

In another implementation, wherein the step of reducing the pressure in the permeate volume of the membrane assembly comprises using a vacuum pump that is operatively connected to the permeate volume of the membrane assembly. In one refinement, the vacuum pump is a venturi vacuum pump.

In another implementation, the method includes the step of heating the mineral-containing wastewater stream before the step of passing the mineral-containing wastewater stream through the membrane assembly. In one refinement, the heating step comprises heating the mineral-containing wastewater stream using natural gas as an energy source.

In another implementation, the pervaporation membrane is an inorganic membrane. In one refinement, the membrane is a ceramic membrane. In another implementation, the pervaporation membrane is a mesoporous membrane. In one refinement, the pervaporation membrane has a pore size of at least about 2 nanometers. In one implementation, the membrane assembly comprises a tubular membrane assembly.

In another implementation, the method includes the step of chilling the water vapor to condense the water vapor into liquid water. In one refinement, the chilling step comprises chilling the water vapor to not greater than about 10°C. In another refinement, the chilling step comprises chilling the water vapor to not greater than about 5°C. In one implementation, at least about 80% of water from the mineral-containing wastewater stream is recovered with the liquid water. In another implementation, the liquid water condensed from the water vapor has a purity of at least about 99.9%.

According to the invention, the mineral-containing wastewater stream comprises a natural brine and it comprises at least 30 g/l dissolved salts including at least about 75 ppm lithium. In a further refinement, the mineral-rich retentate stream comprises at least about 375 ppm lithium, and in yet a further refinement, the mineral-rich retentate stream comprises at least about 750 ppm lithium.

In one implementation, the mineral-containing wastewater stream comprises produced water from an oil/gas extraction operation. In one refinement, the mineral-containing wastewater stream comprises hydrocarbons, and the method includes the step of removing the hydrocarbons from the wastewater before passing the wastewater stream through the membrane assembly. In a further refinement, the hydrocarbons are separated from the wastewater stream before being passed through the membrane assembly. In yet another refinement, the mineral-containing wastewater stream comprises at least about 50 ppm lithium. In a further refinement, the mineral-rich retentate comprises at least about 250 ppm lithium.

In one implementation, the mineral-containing wastewater stream comprises an aqueous solution recovered from an in-situ leaching process. In one refinement, the aqueous solution comprises uranium. In one particular refinement, the aqueous solution comprises at least about 50 ppm uranium. In another refinement, the mineral-rich product comprises at least about 250 ppm uranium. In yet another refinement, the mineral-rich product comprises at least about 500 ppm uranium.

In another implementation, the wastewater stream includes particulate solids and the method includes the step of separating at least a portion of particulate solids from the wastewater stream before passing the wastewater stream through the membrane assembly. In yet another implementation, the mineral-containing wastewater stream has a pH of at least about pH 6 when the wastewater stream is passed through the membrane assembly. In another implementation, the mineral-containing wastewater stream has a pH of not greater than about pH 8 when the mineral-containing wastewater stream is passed through the membrane assembly.

An apparatus is also hereby disclosed but it is not forming part of the current invention. The apparatus includes a membrane assembly, the membrane assembly comprising a pervaporation membrane separating a retentate volume from a permeate volume. A mineral-bearing wastewater stream source is fluidly connected to the membrane assembly to provide a mineral-bearing wastewater stream to the membrane assembly. A heater is configured to heat the mineral-bearing wastewater stream to a temperature above ambient temperature before being passed to the membrane assembly. A chiller is fluidly connected to the membrane assembly and is configured to chill a permeate stream extracted from the permeate volume, and a vacuum pump is operatively connected to the permeate volume and is configured to maintain the permeate volume at a pressure below ambient pressure.

The foregoing apparatus may be characterized as having different configurations, characterizations and/or additional components, which may be employed alone or in any combination. In one configuration, the pervaporation membrane is an inorganic membrane. In another configuration, the membrane is a ceramic membrane. In yet another configuration, the pervaporation membrane has a pore size of at least about 2 nanometers. In a further configuration, the pervaporation membrane has a pore size of not greater than about 20 nm. In another configuration, the water heater is configured to burn methane gas to heat the wastewater stream.

### DESCRIPTION OF THE DRAWINGS

**FIG. 1** illustrates a flowsheet of a water and mineral separation system and method according to an embodiment.
**FIG. 2** schematically illustrates a heating method and heating system according to an embodiment.
**FIG. 3** schematically illustrates a membrane system for a water and mineral separation system according to an embodiment.
**FIG. 4** schematically illustrates a water and mineral separation system and method according to an embodiment.
**FIG. 5** schematically illustrates a water and mineral separation system and method according to an embodiment.
**FIG. 6** schematically illustrates a membrane assembly and method for water and mineral separation according to an embodiment.
**FIG. 7** schematically illustrates a membrane system for a water and mineral separation system according to an embodiment.
**FIGS. 8A** and **8B** illustrate a system and method for the separation of minerals and water from a brine solution according to an embodiment. It is to be noted that the systems on all drawings do not form part of the current invention.

### DESCRIPTION OF THE EMBODIMENTS

The current invention is directed to a method for the treatment of wastewater (e.g., aqueous solutions) to separate high quality (e.g., high purity) water from the other components of the wastewater. For example, the wastewater may be a brine solution and the method may include the formation of a useful concentrate of the other brine components, such as minerals (e.g., metal salts), that may be treated to recover salable compounds from the concentrate. Other sources of wastewater-containing streams that may be treated and purified include hydrometallurgical leach solutions, mine drainage and produced water that is a by-product of oil and gas extraction operations.

The methods disclosed herein include the use of a membrane assembly, and in particular a membrane assembly that includes a pervaporation membrane. Pervaporation membranes exhibit different permeabilities towards different components of a mixture, and this functionality is utilized to selectively transport one component through the membrane as a vapor (e.g., water vapor), and leave the other components in the retentate, e.g., to dehydrate the mixture. This is in contrast to reverse osmosis (RO), which uses an applied pressure to overcome the osmotic pressure and reverse the natural flow of the solvent (e.g., water) through the membrane. RO is costly to operate, in part due to the high pressures that are necessary to overcome the osmotic pressure.

As is noted above, the wastewater may be the by-product of an industrial process, such as produced water from oil and/or natural gas extraction, effluent from mining operations, effluent from power plant cooling towers, etc. The wastewater may also be a natural product, such as a natural brine or seawater, including natural brines that are extracted by in-situ mining techniques or brine mining techniques. Although the following description refers to the wastewater to be treated as a brine (e.g., a brine solution), it is to be appreciated that the methods may be used to treat any type of wastewater or other aqueous solution, including but not limited to the foregoing.

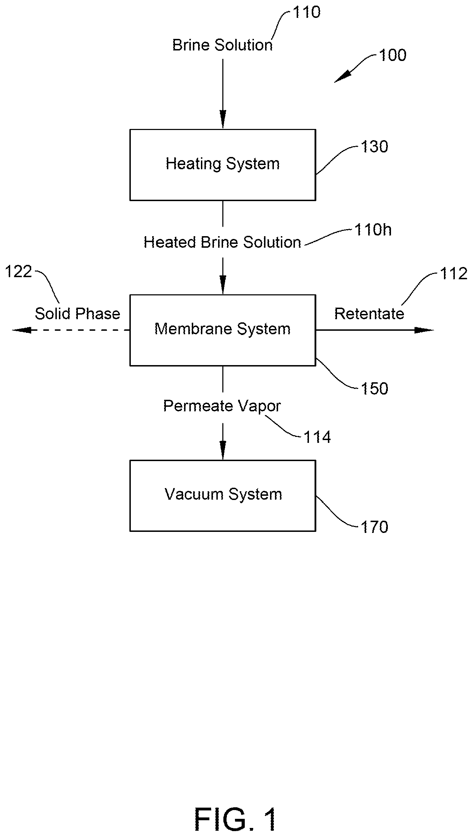

Broadly characterized, the disclosed embodiments include a method for the treatment of a brine solution. Referring to **FIG. 1****,** a brine solution **110** may include salts such as chloride salts, bromide salts, and the like. For example, the brine solution may include salts such as lithium chloride (LiCl), potassium chloride (KCl), sodium chloride (NaCl), magnesium chloride (MgCl₂), and/or calcium chloride (CaCl₂). Other components of the solution may include, but are not limited to, other chlorides such as iron chlorides (e.g., FeCl₂), metal sulfates, metal nitrates, metal carbonates, bromine compounds, and the like. If the raw (e.g., untreated) brine solution includes particulates (e.g. of sand or the like), the raw brine solution may first be treated to remove the particulates, such as by passing the raw brine solution through one or more filters or similar separation devices. For example, a filter system may include a sand filter, e.g. for the removal of particles having a size of greater than about 100 µm followed by a cartridge filter, e.g., for the removal of particles having a size of from about 20 µm to about 100 µm. If the raw solution includes hydrocarbons, the solution may be treated to remove the hydrocarbons using known techniques before being passed through the membrane assembly.

According to the present disclosure, the brine solution is passed through a membrane system **150.** Before being passed through the membrane system **150,** the brine solution **110** may be passed through a heating system **130** to raise the temperature of the brine solution **110** to a desired temperature, e.g., a temperature above the ambient temperature.

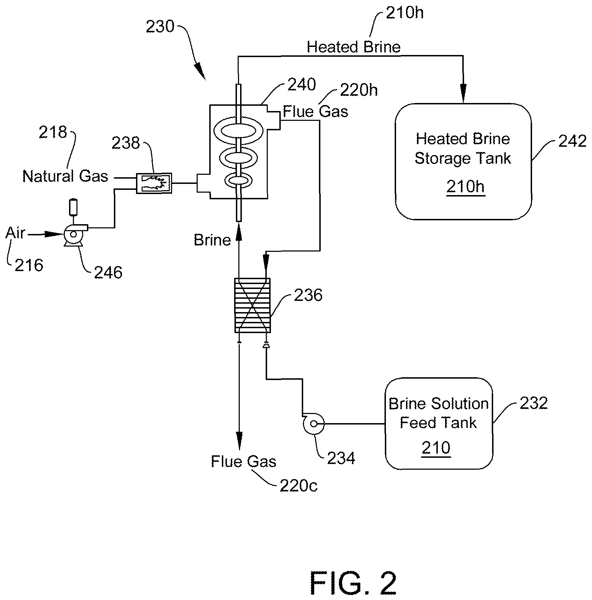

The heating system **130** may include any device that is configured for the heating of a liquid, e.g., the heating of an wastewater stream. One embodiment of a heating system according to the present disclosure is illustrated in **FIG. 2****.** The heating system **230** illustrated in **FIG. 2** includes a boiler **240** that is heated (e.g., fired) by a combustor **238** burning natural gas **218,** e.g., a methane-containing gas. In this regard, air **216** is provided to a compressor **246** and mixed with natural gas **218** in the combustor **238.** In one embodiment, the brine solution **210** is recovered from an oil/gas extraction operation (e.g., produced water), and the natural gas **218** is recovered from the extraction operation, providing an economical source of fuel for the combustor **238.** Hot flue gas **220h** from boiler **240** may be routed to a heat exchanger **236.** At the same time, a feed pump **234** may move brine solution **210** from tank **232** to the heat exchanger **236** to capture waste heat from the hot flue gas **220h** to pre-heat the brine solution **210** before the brine solution is introduced to the boiler **240** and form a cooled flue gas **220c.** Upon being heated to the desired temperature and exiting the boiler **240,** the heated brine **210h** may be temporarily stored in a storage tank **242.**

Referring back to **FIG. 1****,** after heating the brine **110** in the heating system **130,** the heated brine **110h** is introduced to a membrane system **150,** e.g. a membrane assembly comprising at least one pervaporation membrane module. The pervaporation membrane module may include a polymeric membrane or an inorganic membrane, for example. For the separation of water from the brine solution, the pervaporation membrane may be hydrophilic. In one particular embodiment, the membrane module includes an inorganic pervaporation membrane, such as a ceramic membrane fabricated from silica, alumina, zirconia or the like. Examples of useful membrane modules include, but are not limited to, the HybSi^{®}-AR membrane type module available from Pervatech BV, Rijssen, the Netherlands.

In one embodiment, the pervaporation membrane is a mesoporous membrane. According to the invention, the pervaporation membrane has a pore size of at least about 1.5 nanometers. According to the invention, the pervaporation membrane has a pore size of not greater than about 10 nanometers. In one particular characterization, the pervaporation membrane has a pore size range of from about 2.5 nanometers to about 5 nanometers.

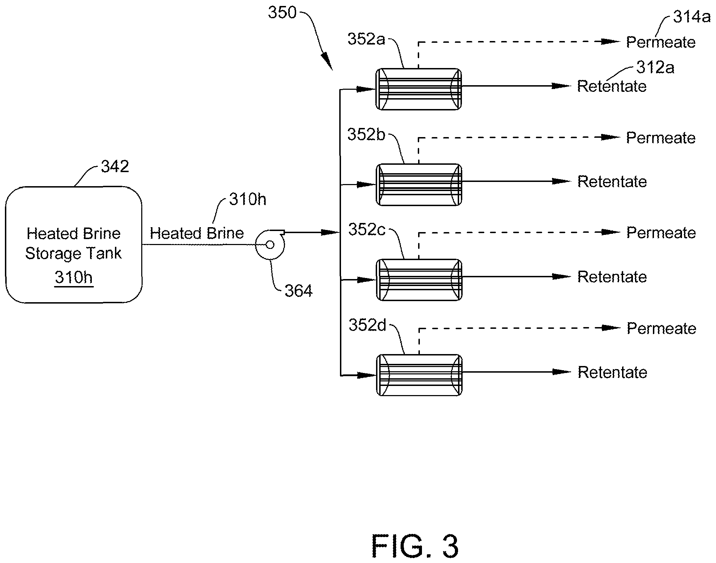

**FIG. 3** schematically illustrates a membrane system **350** according to an embodiment of the present disclosure. The membrane system **350** illustrated in **FIG. 3** includes four membrane modules **352a, 352b, 352c** and **352d** that are arranged in parallel relation. Heated brine **310h** from a storage tank **342** is fed to the membrane modules **352a-352d** by a feed pump **364.** In some embodiments, and as illustrated in more detail below, each membrane module may include at least a first flow channel configured to receive the heated brine **310h,** the flow channel defining a retentate volume separated from a permeate volume by a membrane. The membrane modules **352a-352d** receive the heated brine in the flow channels and the water in the heated brine **310h** passes through the membrane to form at least two product streams, namely a permeate stream **314a** (e.g., in the permeate volume of the membrane) and a retentate stream **312a** (e.g., extracted from the flow channels).

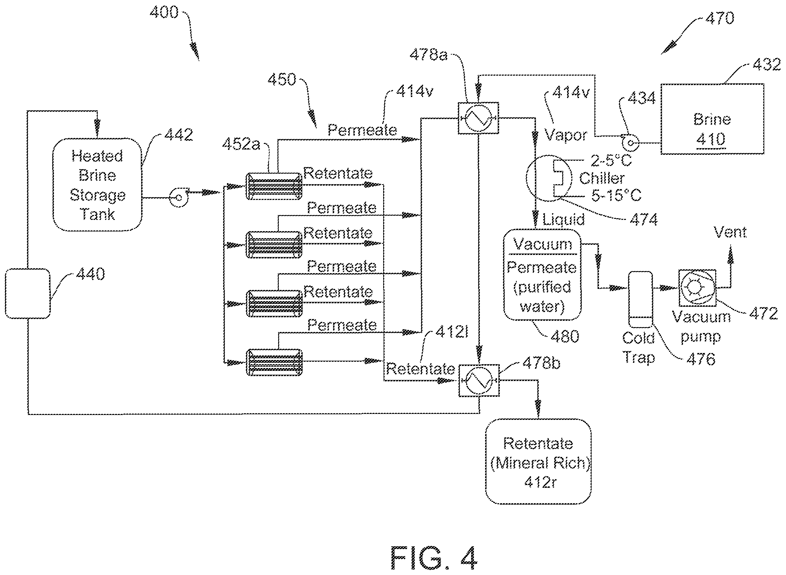

Referring back to **FIG. 1****,** a vacuum system **170** is utilized to reduce the pressure on the permeate side (e.g., in the permeate volume) of the membrane modules, e.g., on the permeate side of the pervaporation membrane modules. **FIG. 4** illustrates a method and system **400** for the separation of water and minerals including one embodiment of such a vacuum system. The vacuum system **470** includes a vacuum pump **472** that is operatively connected to the permeate side of the membrane modules, e.g., module **452a.** The permeate **414** that is extracted from the modules, e.g., with the assistance of the vacuum system **470** is in the form of a vapor, e.g., water vapor **414v.** A chiller **474** is used to condense the water vapor **414v** to liquid water **414l,** which can be captured in water tank **440,** such as for subsequent re-use. A cold trap **476** may disposed between the pump **472** and the chiller **474** to reduce (e.g., substantially eliminate) any residual water from entering the vacuum pump **472,** e.g., to extend the useful lifetime of the pump **472.**

In one embodiment, the chiller is configured (e.g., is operated) to reduce the temperature of the permeate vapor **414v** to not greater than about 12°C, such as not greater than about 10°C, such as not greater than about 2°C. In another embodiment, the chiller **474** is operated to ensure that at least about 95% of the water in the vapor **414v** is converted to liquid water **414l,** such as at least about 98%, such as at least about 99% or even at least about 99.5%. In some embodiments, the recovered water (e.g., in tank **480**) may have a high purity, and in particular may be substantially free of other brine components from the brine solution **410.** For example, the liquid water **414l** may have a purity of at least about 95%, such as at least about 98%, such as at least about 99% or even at least about 99.5%. Further, the amount of water recovered from the brine solution may be at least about 50%, such as at least about 60%, such as at least about 70%, such as at least about 75% or even at least about 80% or at least about 90%. Thus, a large quantity of high purity water may be recovered from the brine solution.

In addition, the system **400** illustrated in **FIG. 4** includes the use of a heat exchanger for recovering waste heat from the permeate **414** and retentate **412** and supplying that waste heat to preheat the incoming brine **410.** As illustrated in **FIG. 4****,** a first heat exchanger **478a** is configured (e.g., placed and operated) to extract waste heat from the permeate vapor **414v** before the permeate vapor is introduced to the chiller **474,** and transfer that heat to the brine **410.** A second heat exchanger **478b** is configured to recover heat from the liquid retentate stream **412l** that is extracted from the membrane modules and also supply that heat to the incoming brine **410,** e.g., before the brine is heated by the heating system **440.**

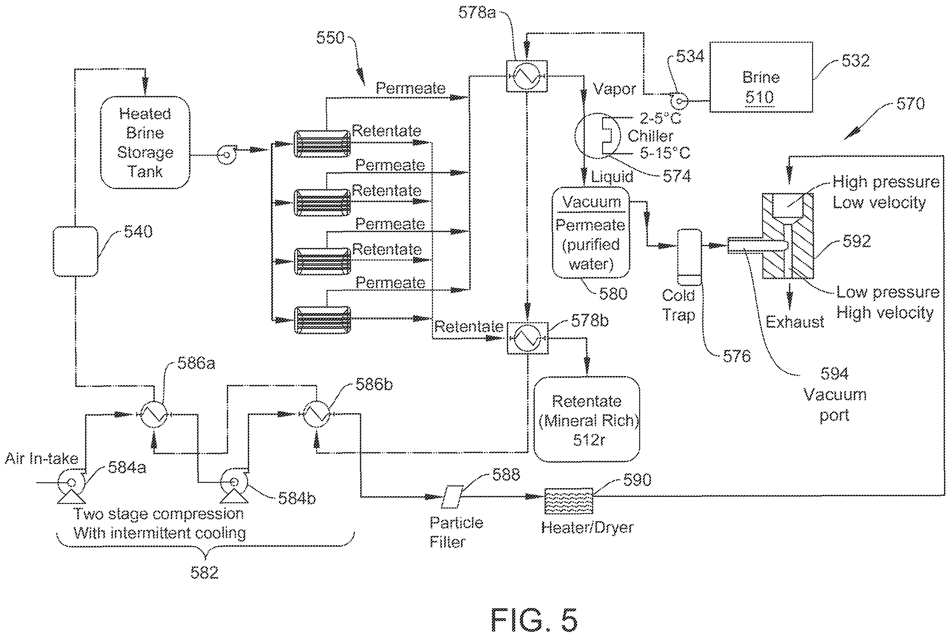

**FIG. 5** schematically illustrates an apparatus and system **500** that is similar to the system illustrated in **FIG. 4****.** However, the system illustrated in **FIG. 5** incudes a vacuum system **570** that eliminates the need for a mechanical vacuum pump. The vacuum system **570** of **FIG. 5** includes an air compression system **582** comprising compressors **584a** and **584b** that are arranged in series, e.g., the first compressor **584a** feeds compressed air to the second compressor **584b** to compress the air in successive stages. As the compression of the air generates waste heat, heat exchangers **586a** and **586bb** may be used to cool the compressed air and supply the brine solution **510** with heat, e.g., before the brine is supplied to a boiler **540.**

The compression system **582** may compress the air to a pressure of at least about 5 bar, such as at least about 8 bar, such as at least about 10 bar or even at least about 12 bar. Typically, it will not be necessary to compress the air to more than about 30 bar, such as no more than about 25 bar, or no more than about 20 bar. The compression system **582** may also include a particle filter **588** and/or a dryer **590** to remove particulates and/or to dry the air after compression. After compression, the compressed air is supplied to a venturi vacuum pump **592.** The compressed air is supplied to the venturi vacuum pump **592** at a relatively high pressure and relatively low velocity, and exits the venturi vacuum pump at a lower pressure and a higher velocity. As a result, the venturi vacuum pump **592** draws a vacuum through a vacuum port **594** that is operatively connected to the membrane modules, e.g., to the permeate side of the membranes, to draw permeate vapor from the membrane modules.

According to certain embodiments of the present disclosure, the composition of the permeate stream and the retentate stream can be controlled through the selection and application of process variables such as the membrane pore size, the temperature of the heated brine entering the membrane system and the value of the reduced pressure on the permeate side of the membrane modules. In one embodiment, minerals from the brine solution are recovered in the retentate stream extracted from the membrane assembly. According to this embodiment, the minerals remain in the retentate and only water vapor is passed through the pervaporation membrane and recovered as the permeate. Broadly characterized, this embodiment includes heating the brine solution to a relatively low temperature and applying a relatively weak vacuum (e.g., higher pressure) to the permeate. In this manner, the minerals (which have a relatively larger molecule size than the water) from the brine solution remain in the retentate. Thus, two product streams are recovered: a mineral-rich retentate and relatively pure water.

For example, the heating system **130 (****FIG. 1****)** may raise the temperature of the brine solution to at least about 40°C, such as at least about 45°C, such as at least about 50°C. Typically, it will not be necessary to heat the brine solution to an excessive temperature; according to the invention it is heated to not greater than about 60°C. Further, the reduced pressure on the permeate side of the membrane modules (e.g., the suction pressure) is reduced to not greater than about 0.4 bar. As a practical matter, the pressure in the permeate volume will be not less than about 0.25 bar, such as not less than about 0.3 bar.

In another embodiment, the brine solution is heated to a relatively higher temperature and/or the vacuum applied to the permeate is relatively stronger (e.g., the pressure is lower) as compared to the embodiment described above for the separation of minerals in the retentate. In this manner, a substantial portion of the minerals are drawn through the pervaporation membrane. It has been found that when operating in this manner, the minerals form a solid (e.g., crystalline) phase on the permeate side of the pervaporation membrane (e.g., in the permeate volume), while the permeate vapor is substantially free of minerals.

According to this embodiment, the heating system **130 (****FIG. 1****)** raises the temperature of the brine solution to at least about 60°C, such as at least 65°C, such as at least about 70°C. Typically, it will not be necessary to heat the brine solution to an excessive temperature, and in certain examples not explicitly recited in the independent claims, the brine solution is heated to not greater than about 90°C, such as not greater than about 85°C, such as not greater than about 80°C. Further, the reduced pressure on the permeate side of the membrane modules is reduced to not greater than about 0.4 bar, such as not greater than about 0.3 bar. As a practical matter, the pressure in the permeate volume will be not less than about 0.1 bar, such as not less than about 0.15 bar. By operating within these parameters, it has been found that a substantial portion of the minerals will permeate through the pervaporation and collect as a solid.

It has been found that another factor influencing the transport of the minerals through the pervaporation membrane is the flow rate of the feed, e.g., the flow rate of the brine solution into the membrane system. A higher flow rate will tend to force the minerals through the pervaporation membrane, even at temperatures below 75°C, such as in the range of about 50°C to 60°C. Conversely, relatively low flow rates will require the use of higher temperatures and lower permeate pressures to transport the minerals through the pervaporation membrane.

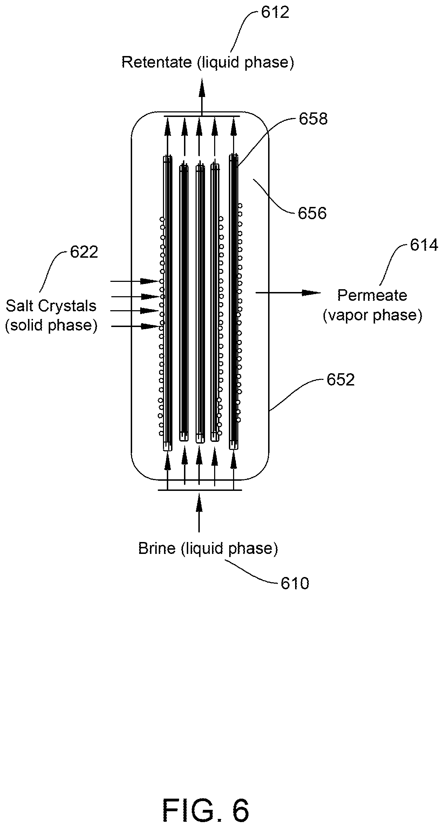

**FIG. 6** schematically illustrates an example of the different material phases according to this embodiment. As is illustrated in **FIG. 6****,** the brine solution **610** (liquid phase) is fed to a pervaporation membrane module **652.** The membrane module **652** comprises a tubular ceramic structure having a plurality of flow channels defining a retentate volume **658.** A retentate stream **612** (liquid phase) is extracted from the retentate volume **658** (e.g., from the opposite end of the flow channels) and a permeate (vapor phase) is extracted from a permeate volume **656** of the assembly . The minerals are deposited as a solid phase **622** (e.g., a crystalline phase) on the permeate side of the flow channels.

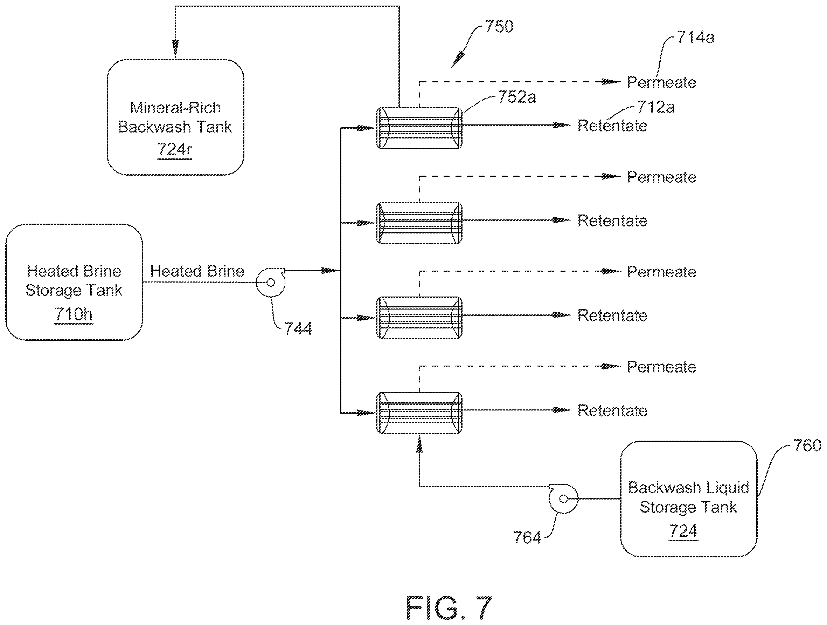

Referring to **FIG. 7****,** a method and system for recovering the solid phase is illustrated, whereby the system does not form part of the invention. The system illustrated in **FIG. 7** includes a tank **760** containing a backwash liquid **724.** The tank **760** is fluidly connected to the membrane assembly **750** by a pump **764** that is configured to pump the backwash liquid **724** to the membrane assembly **750.** Specifically, the backwash liquid **724** is fluidly connected to the permeate volume of the membrane modules (e.g., module **752a**). After collection of the solid phase on the membrane modules, the backwash liquid is pumped through the modules to collect (e.g., to remove) the solid phase minerals from the membrane modules, thereby forming a mineral-rich backwash stream **724r,** e.g., having a high concentration of minerals.

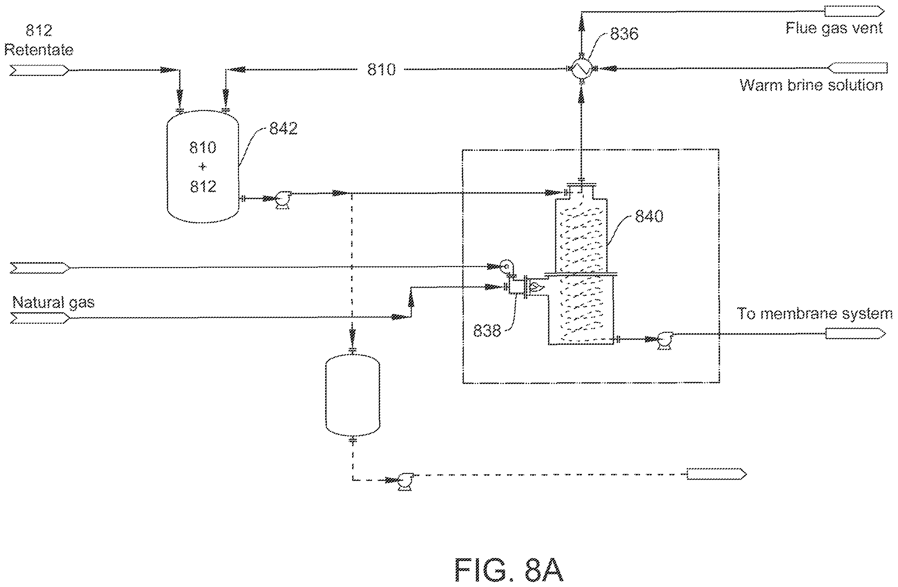

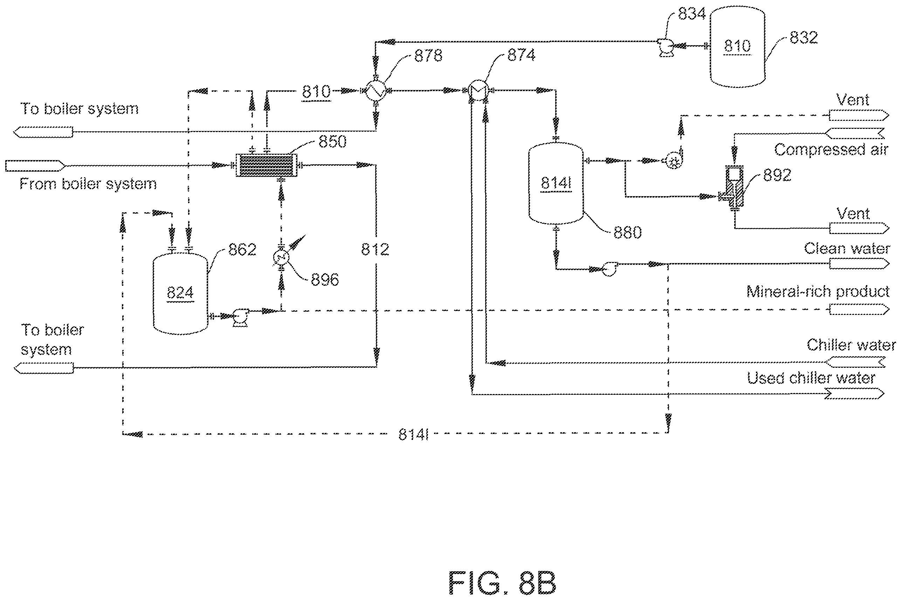

Another embodiment of a method for the separation of minerals and water from a brine solution is illustrated in **FIGS. 8A** and **8B****.** The method illustrated in **FIGS. 8A** and **8B** includes the formation of a mineral-rich solid phase in the membrane modules, and includes a system for the efficient capture and recycle of waste heat in the system.

Referring first to **FIG. 8B****,** a brine solution **810** is stored in a tank **832,** e.g. at ambient temperature. The brine **810** may be transferred by pump **834** to the boiler system **(****FIG. 8A****)** after being passed through a heat exchanger **878** which captures waste heat from the permeate **814v** (water vapor) exiting the membrane system **850** and warms the brine solution.

As illustrated in **FIG. 8B****,** the warm brine solution is then passed through another heat exchanger **836** which captures waste heat from a flue gas exiting the boiler **840** to further preheat the brine solution. The brine solution is then transferred to a feed tank **842** where it may be stored before being transferred to the boiler **840.** At the same time, retentate **812 (****FIG. 8B****)** is transferred from the membrane system **850** to the feed tank **842.** Because the retentate **812** is also warm (e.g., above ambient temperature), it supplies additional heat back to the brine solution in the tank **842.** Thus, the brine solution stream transferred from the tank **842** to the boiler **850** will require a relatively low quantity of energy (e.g., methane gas) to increase the temperature of the brine solution to the desired level for membrane separation in the membrane assembly **850 (****FIG. 8B****).** As illustrated in **FIG. 8B****,** a backwash system is utilized to remove solid phase minerals from the membrane assembly **850.** The backwash system includes a backwash tank **862** that may be supplied with clean (e.g., demineralized) water **814l** from the water tank **880.** The backwash liquid may optionally be heated using a heater **896** to facilitate the removal of the minerals from the membrane assembly **850.**

By way of example only, the elements and minerals in a feed brine solution may be partitioned as shown in **Table I.**

**Table I**

| | **% DISTRIBUTION** | | | | | | | | | |
|---|---|---|---|---|---|---|---|---|---|---|
| **Phase** | **Br** | **SO₄** | **NO₃** | **CO₃** | **LiCl** | **KCl** | **NaCl** | **MgCl₂** | **CaCl₂** | **FeCl₂** |
| Feed (liquid) | 100 | 100 | 100 | 100 | 100 | 100 | 100 | 100 | 100 | 100 |
| Retentate (liquid) | 100 | 100 | 100 | 100 | 4 | 15 | 55 | 45 | 90 | 100 |
| Crystals (solids) | | | | | 96 | 85 | 45 | 55 | 10 | 0 |
| Permeate (water vapor) | 0 | 0 | 0 | 0 | 0 | 0 | 0 | 0 | 0 | 0 |

It is noteworthy that a substantial portion of the LiCl from the brine (e.g., at least about 90%) is recovered in the solid phase, whereas a smaller amount of MgCl₂ from the brine (e.g., not greater than 50%) stays in the retentate. This is beneficial to downstream processing to separate Li from Mg, as these two elements are known to be difficult to separate.

As is noted above, the brine solution may come from a variety of sources including natural or artificial brines. In some embodiments, the brine may include at least about 50,000 ppm, minerals, such as at least about 5,000 ppm minerals, or even at least about 500 ppm minerals. Typically, the brine will include not greater than about 1500 ppm minerals. For example, in some embodiments the brine minerals may include lithium, e.g., in concentrations of at least about 5 ppm, 50 ppm, 150 ppm or higher. The recovery of a mineral-rich product having a high concentration of lithium is advantageous for the production of batteries, e.g., lithium-ion batteries. The brine may also include uranium (e.g., from an in-situ leaching process) and the methods and systems described herein may be used to concentrate the uranium for subsequent recovery.

### EXAMPLES

A sample (Sample 1) of wastewater from a fracking operation is obtained. Sample 1 is first filtered to remove particulate matter, and is treated to remove hydrocarbons and residual oil using known techniques. After filtering and removal of hydrocarbons, the solution is rich in common alkaline salts of potassium, sodium and calcium. The solution also includes some fluorides, iron and some heavy metals. The solution has a density of 1.0988 g/cm³, and the concentrations of salt species and metals listed in **Table II.** All metal salts are in chloride form and total chloride concentration is about 77.8 g/L, or about 77,800 ppm. The dominant species is sodium.

**Table II**

| **Species** | **Sample 1 Concentration** (mg/kg) |
|---|---|
| Bromide | 366 |
| Chloride | 77800 |
| Magnesium | 1770 |
| Lithium | 2.6 |
| Sodium | 46800 |
| Potassium | 314 |
| Calcium | 6790 |
| Aluminum | <0.2 |
| Barium | 3.1 |
| Lead | <0.2 |
| Chromium | <0.2 |
| Iron | 12.0 |
| Selenium | <0.2 |
| Copper | 0.3 |

About 4 liters of the solids-free and crude oil-free wastewater solution is placed in a holding tank from which it is pumped to a pervaporation membrane assembly. The membrane assembly (e.g., module) includes four tubes of a silica-based pervaporation membrane (Pervatech BV, Netherlands). The process circuit includes the holding tank for supplying the solution to the feed side (e.g., retentate side) of the membrane using a feed pump, while a vacuum pump connected to the permeate port. The wastewater is recycled back to the feed tank after passing through the membrane repetitively until most of the freshwater is recovered. The final solution retained in the tank is rich in metal chloride salts and may be disposed of, or may be beneficiated for valuable metals. A second tank with additional wastewater replaces the first tank with the highly concentrated salts and the process is repeated.

In this example, the wastewater solution is heated to about 61°C and the feed pump is activated to begin circulating the solution through the assembly at a rate of about 190 liters/hr. At the same time, the vacuum pump is turned on and is set to reduce the pump gauge pressure to about 0.45 mbar, resulting in a suction pressure on the membrane of about 0.4 bar. The initial flux of water through the pervaporation membrane is about 9.5 kg/[m²·hr]. After a period of time, the feed pump is stopped and about 760 ml of liquid permeate is collected ("Permeate 1-1"). The feed pump is restarted, and this intermittent process is continued with subsequent permeate volumes of 720 ml ("Permeate 1-2"), 320 ml ("Permeate 1-3") and 100 ml ("Permeate 1-4") being collected. The assays are shown in **Table III.**

**Table III**

| | **Concentration** | | | |
|---|---|---|---|---|
| **Species** | **Permeate 1-1** (mg/kg) | **Permeate 1-2** (mg/kg) | **Permeate 1-3** (mg/kg) | **Permeate 1-4** (mg/kg) |
| Bromide | <0.2 | 0.2 | 0.4 | 0.4 |
| Chloride | 20.8 | 102 | 95.8 | 106 |
| Magnesium | 0.4 | 0.8 | 1.8 | 1.8 |
| Lithium | <0.2 | <0.2 | <0.2 | <0.2 |
| Sodium | 13.6 | 68.1 | 57.4 | 57.4 |
| Potassium | 0.4 | 0.9 | 0.3 | 0.5 |
| Calcium | 2.3 | 6.3 | 11.7 | 11.7 |
| Aluminum | <0.2 | <0.2 | <0.2 | <0.2 |
| Barium | <0.2 | <0.2 | <0.2 | <0.2 |
| Lead | <0.2 | <0.2 | <0.2 | <0.2 |
| Chromium | <0.2 | <0.2 | <0.2 | <0.2 |
| Iron | <0.2 | <0.2 | <0.2 | <0.2 |
| Selenium | <0.2 | <0.2 | <0.2 | <0.2 |
| Copper | <0.2 | <0.2 | <0.2 | <0.2 |

To illustrate the efficacy of the method, the combined the data from **Table I** and **Table IV** for chlorides and sodium (e.g., the dominant salt species of sodium chloride) is shown:

**Table IV**

| | **Concentration** | | | | |
|---|---|---|---|---|---|
| **Species** | **Sample 1** (mg/kg) | **Permeate 1-1** (mg/kg) | **Permeate 1-2** (mg/kg) | **Permeate 1-3** (mg/kg) | **Permeate 1-4** (mg/kg) |
| Chlorides | 77800 | 20.8 | 102 | 95.8 | 106 |
| Sodium | 46800 | 13.6 | 68.1 | 57.4 | 57.4 |

**Table IV** illustrates that the method was effective to remove a high purity water permeate having significantly reduced chloride concentration. It is believed that the concentration of chloride increased with subsequent permeate samples as a result of chloride salts (e.g., NaCl) forming on the permeate side of the membrane. This is also evidenced by the flux through the membrane decreasing from an initial flux of about 9.5 kg/[m2·hr] to about 6.5 kg/[m²·hr] near the end of the sampling procedure.

After Permeate 1-3 (320 ml) is removed, about 190 ml of deionized water is used to flush the permeate side of the membrane. The resulting flush water was assayed, and the results are shown in **Table V.**

**Table V**

| **Species** | **Flush Water Concentration** (mg/kg) |
|---|---|
| Bromide | 31.7 |
| Chloride | 17800 |
| Magnesium | 200 |
| Lithium | 0.2 |
| Sodium | 12200 |
| Potassium | 31.8 |
| Calcium | 826 |
| Aluminum | <0.2 |
| Barium | 0.4 |
| Lead | <0.2 |
| Chromium | <0.2 |
| Iron | <0.2 |
| Selenium | <0.2 |
| Copper | <0.2 |

At the same time (i.e., after Permeate 1-3 was collected), the retentate contained a concentration of 152000 mg/kg chloride and 87100 mg/kg sodium.

**Table VI** illustrates the assay of a small sample of the crystalline layer that develops along the external surface (permeate side) of the pervaporation membrane taken after completion of the testing.

**Table VI**

| **Species** | **Solid Permeate Concentration** (mg/kg) |
|---|---|
| Bromide | 921 |
| Chloride | 506000 |
| Magnesium | 5130 |
| Lithium | 4.2 |
| Sodium | 352000 |
| Potassium | 1090 |
| Calcium | 17500 |
| Aluminum | 19.6 |
| Barium | 8.9 |
| Lead | 8.1 |
| Chromium | 10.5 |
| Iron | 151 |
| Selenium | <0.2 |
| Copper | 1.9 |

It is clear from the assays shown in **Table V** and **Table VI** that sodium is selectively diffused through the pervaporation membrane and is retained in the crystalline phase on the permeate side of the membrane, while heavy metals remain in the retentate. This is evidenced by partition of 88-95% of sodium to the crystal phase while less than 1% of each of the metals reports the crystalline phase. This result signifies the ability to recover water selectively through the permeate and specific metal crystals such as sodium chloride and lithium chloride to the crystal phase. A small volume of backwash water is applied to recover crystals from membrane surfaces at ambient or otherwise moderate temperature. This practice mimics solvent extraction, where the membrane serves as a media for separating sodium or lithium from bulk metal elements in a feed liquor to a third phase. The crystals are stripped by a small volume of electrolyte to produce a sufficiently concentrated electrolyte suitable for subsequent reduction to the metal by electrolysis or precipitation.

Another sample ("Sample 2") of wastewater solution from a fracking process is obtained having a density of 1.031 g/ml and a concentration of salt species and metals listed in **Table VII.** The total metal chloride concentration is about 25.2g/L or about 25,200 ppm. The dominant species is sodium.

**Table VII**

| **Species** | **Feed Concentration** (mg/kg) |
|---|---|
| Bromide | 174 |
| Chloride | 25200 |
| Magnesium | 424 |
| Lithium | 5.0 |
| Sodium | 16000 |
| Potassium | 272 |
| Calcium | 1130 |
| Aluminum | <0.2 |
| Barium | 1.3 |
| Lead | <0.2 |
| Chromium | <0.2 |
| Iron | 0.5 |
| Selenium | <0.2 |
| Copper | <0.2 |

In a manner similar to that described above for Sample 1, about 4 liters of the solution is placed in a pervaporation membrane assembly. The membrane assembly includes multiple silica-based pervaporation membrane tubes (Pervatech BV, Netherlands). The assembly also includes a tank for supplying the solution to the feed side of the porous membrane tubes using a feed pump and a vacuum pump is connected to the permeate port. The solution is heated to about 61°C and the feed pump is activated to begin circulating the solution through the assembly at a rate of about 190 liters/hr. At the same time, the vacuum pump is turned on and is set to a gauge pressure of about 0.45 mbar, resulting in a suction pressure on the permeate side of the membrane of about 0.4 bar. The initial flux of water through the pervaporation membrane is about 8.45 kg/[m²·hr]. After a period of time, the feed pump is stopped and about 690 ml of liquid permeate is collected ("Permeate 2-1"). The feed pump is restarted, and this intermittent process is continued with subsequent permeate volumes of 710 ml ("Permeate 2-2"), 250 ml ("Permeate 2-3") 210 ml ("Permeate 2-4") and 430 ml ("Permeate 2-5") being collected. The assays are shown in **Table VIII.**

**Table VIII**

| | **Concentration** | | | | |
|---|---|---|---|---|---|
| **Species** | **Permeate 2-1** (mg/kg) | **Permeate 2-2** (mg/kg) | **Permeate 2-3** (mg/kg) | **Permeate 2-4** (mg/kg) | **Permeate 2-5** (mg/kg) |
| Bromide | 0.5 | 0.2 | 0.6 | 0.4 | <0.2 |
| Chloride | 66.9 | 22.9 | 61.0 | 39.5 | 10.4 |
| Magnesium | 2.2 | 1.1 | 3.2 | 1.9 | 0.4 |
| Lithium | <0.2 | <0.2 | <0.2 | <0.2 | <0.2 |
| Sodium | 35.9 | 9.4 | 24.5 | 18.0 | 5.7 |
| Potassium | <0.2 | 0.8 | 0.4 | <0.2 | 1.4 |
| Calcium | 10.1 | 4.6 | 13.6 | 8.5 | 2.1 |
| Aluminum | <0.2 | <0.2 | <0.2 | <0.2 | 0.2 |
| Barium | <0.2 | <0.2 | <0.2 | <0.2 | <0.2 |
| Lead | <0.2 | <0.2 | <0.2 | <0.2 | <0.2 |
| Chromium | <0.2 | <0.2 | <0.2 | <0.2 | <0.2 |
| Iron | <0.2 | <0.2 | <0.2 | <0.2 | <0.2 |
| Selenium | <0.2 | <0.2 | <0.2 | <0.2 | <0.2 |
| Copper | <0.2 | <0.2 | <0.2 | <0.2 | <0.2 |

To illustrate the efficacy of the method, the combined the data from **Table VII** and **Table VIII** for chlorides and sodium (e.g., the dominant salt species of sodium chloride) is shown.

**Table IX**

| | **Concentration** | | | | | |
|---|---|---|---|---|---|---|
| **Species** | **Sample 2** (mg/kg) | **Permeate 2-1** (mg/kg) | **Permeate 2-2** (mg/kg) | **Permeate 2-3** (mg/kg) | **Permeate 2-4** (mg/kg) | **Permeate 2-5** (mg/kg) |
| Chlorides | 25200 | 66.9 | 22.9 | 61.0 | 39.5 | 10.4 |
| Sodium | 16000 | 35.9 | 9.4 | 24.5 | 18.0 | 5.7 |

**Table IX** illustrates that the method was effective to remove a high purity water permeate having significantly reduced chloride concentration.

## Claims

1. A method for the separation of minerals from a wastewater stream comprising a natural brine and at least about 30 g/l dissolved salts including at least 75 ppm lithium, comprising the steps of:
passing the wastewater stream at substantially ambient pressure and at a temperature of at least about 60°C through a membrane assembly comprising a pervaporation membrane having a pore size of at least about 1.5 nanometers and not greater than about 10 nanometers, the pervaporation membrane separating a retentate volume from a permeate volume;
reducing the pressure in the permeate volume of the membrane assembly to not greater than 0.4 bar, wherein water from the wastewater stream diffuses through the pervaporation membrane to form a water vapor in the permeate volume;
pumping backwash liquid from a tank to the permeate volume of the membrane modules of the membrane assembly; and
collecting the solid phase on the membrane modules and pumping backwash liquid through the modules to collect the solid phase minerals, thereby forming a mineral-rich backwash stream.

2. The method recited in Claim 1, wherein the step of reducing the pressure in the permeate volume of the membrane assembly comprises reducing the pressure to not greater than about 0.3 bar.

3. The method recited in any one of Claims 1 or 2, wherein the step of passing the wastewater stream through the membrane assembly comprises passing the wastewater stream at a temperature of at least about 65°C.

4. The method recited in any one of Claims 1 to 3, comprising the step of heating the wastewater stream before the step of passing the wastewater stream through the membrane assembly.

5. The method recited in any one of Claims 1 to 4, wherein the pervaporation membrane is an inorganic membrane.

6. The method recited in any one of Claims 1 to 5, wherein the pervaporation membrane has a pore size of at least about 2 nanometers.

7. The method recited in any one of Claims 1 to 6, comprising a step of chilling the water vapor to condense the water vapor into liquid water.

8. The method recited in any one of Claims 1 to 7, wherein the mineral-rich product stream comprises at least about 375 ppm lithium.

## Patentansprüche

1. Verfahren zur Abscheidung von Mineralien aus einem Abwasserstrom, der eine Natursole und mindestens etwa 30 g/l gelöste Salze umfasst, die mindestens 75 ppm Lithium aufweisen, umfassend die folgenden Schritte:
Durchlassen des Abwasserstroms bei im Wesentlichen Umgebungsdruck und bei einer Temperatur von mindestens etwa 60 °C durch eine Membrananordnung, die eine Pervaporationsmembran mit einer Porengröße von mindestens etwa 1,5 Nanometer und höchstens etwa 10 Nanometer umfasst, wobei die Pervaporationsmembran ein Retentatvolumen von einem Permeatvolumen trennt;
Herabsetzen des Drucks im Permeatvolumen der Membrananordnung auf höchstens 0,4 bar, wobei Wasser aus dem Abwasserstrom durch die Pervaporationsmembran diffundiert, um einen Wasserdampf im Permeatvolumen zu bilden;
Pumpen von Rückspülflüssigkeit aus einem Tank zum Permeatvolumen der Membranmodule der Membrananordnung; und
Sammeln der Festphase auf den Membranmodulen und Pumpen von Rückspülflüssigkeit durch die Module zum Sammeln der Festphasenminerale, um dadurch einen mineralreichen Rückspülstrom zu bilden.

2. Verfahren nach Anspruch 1, wobei der Schritt des Herabsetzens des Drucks im Permeatvolumen der Membrananordnung ein Herabsetzen des Drucks auf höchstens 0,3 bar umfasst.

3. Verfahren nach einem der Ansprüche 1 oder 2, wobei der Schritt des Durchlassens des Abwasserstroms durch die Membrananordnung ein Durchlässen des Abwasserstroms bei einer Temperatur von mindestens 65 °C umfasst.

4. Verfahren nach einem der Ansprüche 1 bis 3, umfassend den Schritt des Erwärmens des Abwasserstroms vor dem Schritt des Durchlassens des Abwasserstroms durch die Membrananordnung.

5. Verfahren nach einem der Ansprüche 1 bis 4, wobei die Pervaporationsmembran eine anorganische Membran ist.

6. Verfahren nach einem der Ansprüche 1 oder 5, wobei die Pervaporationsmembran eine Porengröße von mindestens etwa 2 Nanometer aufweist.

7. Verfahren nach einem der Ansprüche 1 bis 6, umfassend einen Schritt des Abkühlens des Wasserdampfs, um den Wasserdampf zu flüssigem Wasser zu kondensieren.

8. Verfahren nach einem der Ansprüche 1 bis 7, wobei der mineralreiche Produktstrom mindestens etwa 375 ppm Lithium umfasst.

## Revendications

1. Procédé pour la séparation de minéraux d'un courant d'eaux usées comprenant une saumure naturelle et au moins 30 g/l environ de sels dissous incluant au moins 75 ppm de lithium, comprenant les étapes de :
passage du courant d'eaux usées sensiblement à la pression ambiante et à une température d'au moins 60 °C environ à travers un ensemble membrane comprenant une membrane de pervaporation ayant une taille de pores d'au moins 1,5 nanomètre environ et ne dépassant pas 10 nanomètres environ, la membrane de pervaporation séparant un volume de rétentat d'un volume de perméat ;
réduction de la pression dans le volume de perméat de l'ensemble membrane jusqu'à 0,4 bar maximum, l'eau issue du courant d'eaux usées diffusant à travers la membrane de pervaporation pour former une vapeur d'eau dans le volume de perméat ;
pompage de liquide de lavage à contre-courant depuis un réservoir jusqu'au volume de perméat des modules de membrane de l'ensemble membrane ; et
collecte de la phase solide sur les modules de membrane et pompage de liquide de lavage à contre-courant à travers les modules pour collecter les minéraux en phase solide, pour former ainsi un courant de lavage à contre-courant riche en minéraux.

2. Procédé selon la revendication 1, dans lequel l'étape de réduction de la pression dans le volume de perméat de l'ensemble membrane comprend la réduction de la pression jusqu'à environ 0,3 bar maximum.

3. Procédé selon l'une quelconque des revendications 1 et 2, dans lequel l'étape de passage du courant d'eaux usées à travers l'ensemble membrane comprend le passage du courant d'eaux usées à une température d'au moins 65 °C environ.

4. Procédé selon l'une quelconque des revendications 1 à 3, comprenant l'étape de chauffage du courant d'eaux usées avant l'étape de passage du courant d'eaux usées à travers l'ensemble membrane.

5. Procédé selon l'une quelconque des revendications 1 à 4, dans lequel la membrane de pervaporation est une membrane inorganique.

6. Procédé selon l'une quelconque des revendications 1 à 5, dans lequel la membrane de pervaporation a une taille de pores d'au moins 2 nanomètres environ.

7. Procédé selon l'une quelconque des revendications 1 à 6, comprenant une étape de refroidissement de la vapeur d'eau pour condenser la vapeur d'eau en eau liquide.

8. Procédé selon l'une quelconque des revendications 1 à 7, dans lequel le courant de produit riche en minéraux comprend au moins 375 ppm environ de lithium.
